# EUROPÄISCHE PATENTSCHRIFT

(11) **EP 1 225 379 B1**
(45) Veröffentlichungstag und Bekanntmachung des Hinweises auf die Patenterteilung: **27.12.2006**
(21) Anmeldenummer: 02000422.2
(22) Anmeldetag: 08.01.2002
(51) Int. Cl.: F16J 15/46, F04D 29/14

(54) **Dichtungsbalgsystem für rotierende Wellen**
Bellows seal for a rotary shaft
Joint à soufflet pour arbre tournant

(30) Priorität: 18.01.2001 DE 10102103
(43) Veröffentlichungstag der Anmeldung: 24.07.2002
(73) Patentinhaber: Sachtleben Chemie GmbH, 47198 Duisburg (DE)
(72) Erfinder: Engels, Klaus, 47647 Kerken (DE); Fach, Roland, 46514 Schermbeck (DE); Leuchtenberger, Stefan, 47228 Duisburg (DE); Volz, Fritz, 47198 Duisburg (DE)
(74) Vertreter: Scherzberg, Andreas Hans

(56) Entgegenhaltungen:
- EP-A- 0 340 385
- DE-B- 1 200 083
- DE-B- 1 218 825
- GB-A- 1 257 098
- US-A- 5 114 054

## Beschreibung

Die Erfindung betrifft ein Dichtungsbalgsystem für rotierende Wellen nach dem Oberbegriff des Anspruchs 1. Ein solches system ist z.B. durch die

EP-A-0 340 385 bekannt geworden.

Umwälzpumpen werden z. B. in der chemischen Industrie zum Fördern und/oder Umwälzen von zum Teil aggressiven Medien verwendet. So wird z. B. in einer Dünnsäure-Rückgewinnungsanlage nach der EP 0 476 744 B1 70%ige Schwefelsäure mit einer Temperatur von 120°C umgewälzt.

Da durch diese aggressiven Medien alle Pumpenteile einer starken Belastung unterworfen sind, müssen diese Pumpen öfters gewartet und repariert werden. Hierzu ist die Pumpe abzustellen. Es muss hierbei sichergestellt sein, dass bei Stillstand der Pumpenwelle und damit Ausfall der Spaltdichtungen keine aggressiven Medien aus der Pumpe austreten können. Aus diesem Grund ist im Wellendichtungsraum hinter den Spaltdichtungen eine Wellendichtung eingebaut. Diese Wellendichtung wird auch als Dichtungsbalg bezeichnet.

Derartige Dichtungsbälge bestehen nach dem Stand der Technik aus einem Teflonbalg der eine Andruckfläche aufweist, die beim Stillstand der Pumpenwelle von einem Anpressmedium an die Welle gepresst wird und diese abdichtet, so dass keine aggressiven Fördermedien austreten können. Die verwendeten Anpressmedien richten sich nach dem Anforderungsfall, z. B. wird bei Schwefelsäure als Fördermedium bevorzugt Pressluft verwendet.

Nachteilig an diesen Dichtungsbälgen ist, dass sie inklusive der Montagekosten sehr teuer sind und außerdem nach ca. 50 Schaltzyklen ausgewechselt werden müssen.

Der Erfindung liegt die Aufgabe zu Grunde, ein Dichtungsbalgsystem für rotierende Wellen nach dem Oberbegriff des Anspruchs 1 so zu verbessern, dass die Lebensdauer bzw. die Anzahl der Schaltzyklen wesentlich verbessert ist.

Erfindungsgemäß wird diese Aufgabe dadurch gelöst, dass die Andruckfläche an ihren Enden jeweils über eine sich in Längsrichtung der Welle erstreckende Ausbuchtung in einen im Umfang verringerten Kragen übergeht, dass die beiden Ausbuchtungen frei beweglich angeordnet sind und dass der Dichtungsbalg aus einem Elastomer bzw. Fluorkunststoff hergestellt ist. Nachfolgend einige Beispiele von Elastomeren und Fluorkunststoffen

Beispiele von Fluorkunststoffen:
- Polyvinylidenfluorid (Handelsname: z. B. Kynar, Solef, Kurzform PVDF)
- Polytetrafluoräthylen (Handelsname: z. B. Teflon, Hostaflon TF, Kurzform PTFE)
- Fluorkautschuk (Handelsname: z. B. Viton, Kalrez, Kurzform FPM)

Beispiele von Elastomeren:
- Butyl- Kautschuk (Kurzform IIR)
- Natur- Kautschuk (Kurzform NR)
- Acrylnitril- Butadien- Kautschuk (Handelsname: z. B. Perbunan, Kurzform NBR)
- Chloropren- Kautschuk (Handelsname: z. B. Neopren, Kurzform CR)

Durch die erfindungsgemäße Ausbuchtung an den Enden der Andruckfläche und deren frei bewegliche Anordnung kann sich die Andruckfläche in radialer Richtung zur Welle frei bewegen. Die Dehnung beim Beaufschlagen durch das Anpressmedium erfolgt in den Ausbuchtungen. Im Querschnitt gesehen ist der Dichtungsbalg wie ein Autoreifen geformt. Diese Maßnahmen bedingen eine höhere Elastizität, einen gleichmäßigen Anpressdruck und damit eine Reduzierung der Reibfläche.

Bevorzugt ist der Dichtungsbalg aus einem mit festigkeitserhöhenden Füllstoffen versehenen Teflon hergestellt.

Damit das Elastomer bzw. der Fluorkunststoff eine höhere Festigkeit aufweist, kann es erfindungsgemäß Füllstoffe, bevorzugt z. B. aus einem oder mehreren der folgenden Stoffe Graphit, Talkum, Kreide, Titandioxid, Siliziumkarbid oder Glaspartikel. Glaspartikel haben sich als besonders effizient erwiesen.

In vorteilhafter Ausführungsform sind auf der Andruckfläche in Umfassungsrichtung verlaufende Nuten angeordnet, die zur Aufnahme von eindringendem Fördermedium dienen.

Zur besseren Befestigung des Dichtungsbalgs ist im Kragen ein Stützring eingesetzt, wobei zwischen Stützring und Andruckfläche ein Abstand besteht, damit die freie Beweglichkeit der Andruckfläche gewährleistet ist.

Am oberen Ende des Kragens ist bevorzugt ein Flansch zur Aufnahme eines Dichtungsringes angeordnet und dieser Flansch ist dichtend in einer Halterung eingeklemmt.

Im Stützring ist zweckmäßigerweise eine Bohrung zur Zufuhr des Anpressmediums angeordnet.

Zur Abfuhr austretender Leckagen ist im Bereich des Kragens ein sich in Längsrichtung erstreckender Tropfring angeordnet.

Zum Einbau des Dichtungsbalgs in Pumpen mit einer Rückwand und einer Brille im Wellendichtungsraum ist dieser vorteilhafterweise zwischen der Rückwand und der Brille über einen an der Brille verschraubten Gehäusering befestigt.

Weitere Merkmale der Erfindung ergeben sich aus den Figuren, die nachfolgend beschrieben sind. Es zeigt:
- Fig. 1: eine Pumpe nach dem Stand der Technik im Querschnitt und
- Fig. 2: ein erfindungsgemäßes Dichtungsbalgsystem im Schnitt.

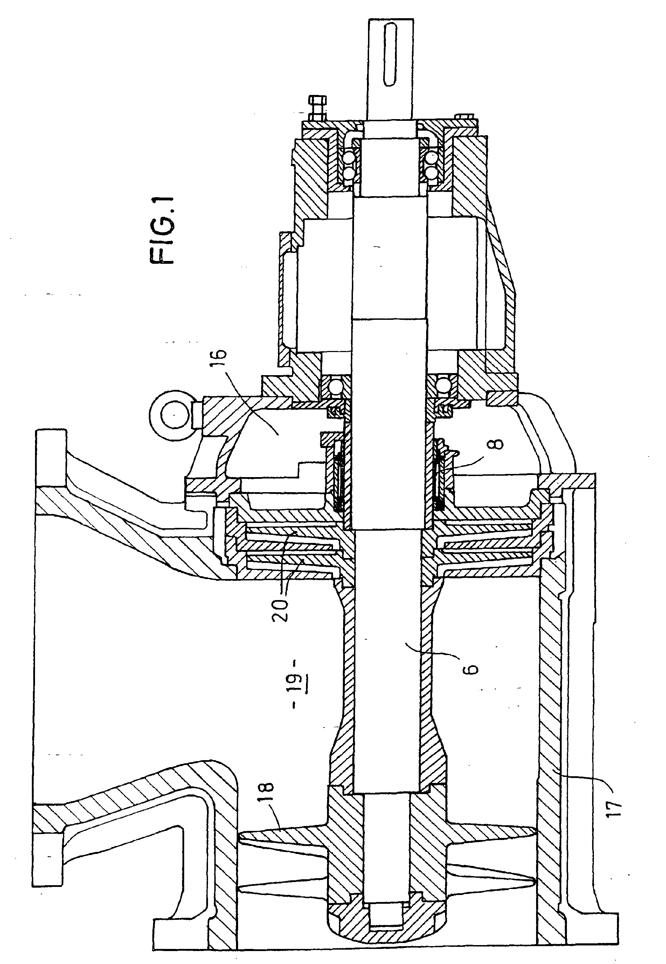

Fig. 1 zeigt mehr schematisch die wesentlichen Elemente einer Umwälzpumpe nach dem Stand der Technik für aggressive Fördermedien, wie z. B. Schwefelsäure.

Mit dem Bezugszeichen 17 ist ein Pumpengehäuse bezeichnet in dem ein Laufrad 18 zum Umwälzen des Fördermediums angeordnet ist. Dieses Laufrad 18 ist an einer Welle 6 befestigt. Die Welle 6 führt durch den Förderraum 19 in den Wellendichtungsraum 16 zum Motor. Zur Abdichtung des Wellendichtungsraumes 16 sind Spaltdichtungen 20 am Übergang vom Förderraum 19 zum Wellendichtungsraum 16 angeordnet.

Bei Stillstand der Pumpe sind diese Spaltdichtungen 20 unwirksam, so dass zusätzlich ein Dichtungsbalg 8 im Wellendichtungsraum 16 angeordnet ist. Dieser Dichtungsbalg 8 wird mit einem Anpressmedium beaufschlagt, wodurch seine Andruckfläche an die Welle 6 gepresst wird. Hierdurch erfolgt die gewünschte Abdichtung.

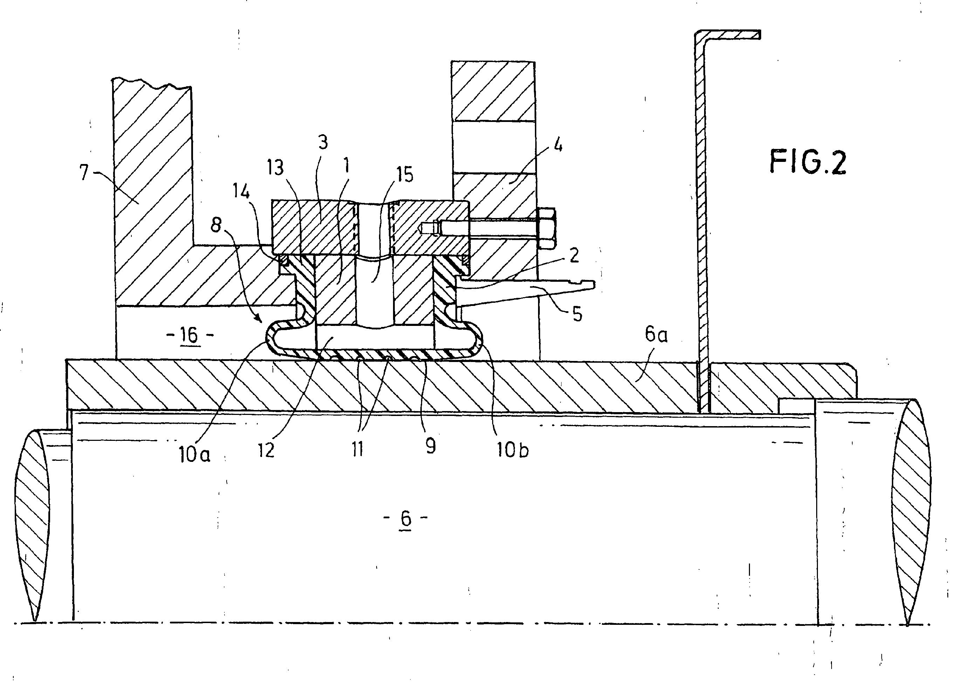

Figur 2 zeigt im Ausschnitt einen Wellendichtungsraum 16 einer Pumpe. Auf einer Pumpenwelle, nachfolgend als Welle 6 bezeichnet, ist eine Wellenschutzhülse 6a angebracht. Welle und Wellenschutzhülse werden in dieser Anmeldung als Welle 6 bezeichnet.

Zur Abdichtung des Wellendichtungsraums 16 beim Stillstand der Pumpe ist ein Dichtungsbalgsystem zwischen der Rückwand 7 und der Brille 4 angeordnet. Der Dichtungsbalg trägt das Bezugszeichen 8.

Der Dichtungsbalg 8 besteht aus einer Andruckfläche 9, die bei Stillstand der Pumpe gegen die Welle 6 gepresst wird.

Der Dichtungsbalg 8 ist im Schnitt wie ein Autoreifen geformt, wobei die Andruckfläche 9 das Laufprofil des Reifens darstellt.

Die Andruckfläche geht an ihren Enden jeweils über eine sich in Längsrichtung der Welle 6 erstreckende Ausbuchtung 10a, 10b in einen im Umfang verringerten Kragen 2 über. Die Ausbuchtungen 10a, 10b sind frei beweglich angeordnet.

Auf der Andruckfläche 9 sind in Umfangsrichtung verlaufende Nuten 11 angeordnet.

Zur Befestigung ist im Kragen 2 ein Stützring 1 eingesetzt, wobei zwischen diesem und der Andruckfläche 9 ein Abstand 12 besteht, um die freie Beweglichkeit der Andruckfläche 9 zu gewährleisten.

Am oberen Ende des Kragens 2 ist ein Flansch 13 angeordnet zur Aufnahme eines Dichtungsringes 14. Dieser Flansch 13 ist dichtend in einer Halterung eingeklemmt.

Im Stützring 1 ist eine Bohrung 15 zur Zufuhr des Anpressmediums eingebracht.

Der Dichtungsbalg ist zwischen der Rückwand 7 und der Brille 4 über einen an der Brille 4 verschraubten Gehäusering 3 befestigt. In diesem Gehäusering 3 ist die Bohrung 15 vom Stützring 1 weitergeführt.

Zur Abfuhr austretender Leckagen ist im Bereich des Kragens 2 ein sich in Längsrichtung der Welle 6 erstreckender Tropfring 5 angeordnet.

Kurz vor dem Stillstand der Pumpe wird das Anpressmedium, z. B. Pressluft über die Bohrung 15 in den Dichtungsbalg 8 gepumpt. Als Folge hiervon wird die Andruckfläche 9 gegen die Welle 6 gepresst, wodurch der Wellenabdichtungsraum 16 gegenüber der Umwelt abgedichtet ist, so dass kein Fördermedium austreten kann.

Der Dichtungsbalg 8 besteht in dieser Ausführungsform aus Teflon mit festigkeitserhöhenden Glaspartikeln.

## Patentansprüche

1. Dichtungsbalgsystem für rotierende Wellen (6), insbesondere an Pumpen, mit einem Dichtungsbalg (8) der eine Andruckfläche (9) aufweist, die beim Stillstand der Welle (6) von einem Anpressmedium an die Welle (6) gepresst wird und diese abdichtet, **dadurch gekennzeichnet,**
- **dass** die Andruckfläche (9) an ihren Enden jeweils über eine sich in Längsrichtung der Welle (6) erstreckende Ausbuchtung (10a, 10b) in einen im Umfang verringerten Kragen (2) übergeht,
- **dass** die beiden Ausbuchtungen (10a, 10b) frei beweglich angeordnet sind und
- **dass** der Dichtungsbalg (8) aus einem Elastomer bzw. Fluorkunststoff hergestellt ist.

2. Dichtungsbalgsystem nach Anspruch 1, **dadurch gekennzeichnet, dass** der Dichtungsbalg (8) aus Teflon hergestellt ist.

3. Dichtungsbalgsystem nach Anspruch 1 oder 2, **dadurch gekennzeichnet, dass** das Elastomer bzw. der Fluorkunststoff festigkeitserhöhende Füllstoffe enthält.

4. Dichtungsbalgsystem nach Anspruch 3, **dadurch gekennzeichnet, dass** die Füllstoffe aus einem oder mehreren der nachfolgenden Stoffe bestehen: Graphit, Talkum, Kreide, Titandioxid, Siliziumkarbid,Glaspartikel.

5. Dichtungsbalgsystem nach einem der Ansprüche 1 bis 4, **dadurch gekennzeichnet, dass** auf der Andruckfläche (9) in Umfangsrichtung verlaufende Nuten (11) angeordnet sind.

6. Dichtungsbalgsystem nach einem der Ansprüche 1 bis 5, **dadurch gekennzeichnet, dass** im Kragen (2) ein Stützring (1) eingesetzt ist, wobei zwischen Stützring (1) und Andruckfläche (9) ein Abstand (12) besteht.

7. Dichtungsbalgsystem nach einem der Ansprüche 1 bis 6, **dadurch gekennzeichnet, dass** am oberen Ende des Kragens (2) ein Flansch (13) zur Aufnahme eines Dichtungsringes (14) angeordnet ist und dieser Flansch (13) dichtend in einer Halterung eingeklemmt ist.

8. Dichtungsbalgsystem nach Anspruch 6 oder 7, **dadurch gekennzeichnet, dass** im Stützring (1) eine Bohrung (15) zur Zufuhr des Anpressmediums angeordnet ist.

9. Dichtungsbalgsystem nach einem der Ansprüche 1 bis 8, **dadurch gekennzeichnet, dass** im Bereich des Kragens (2) ein sich in Längsrichtung erstrekkender Tropfring (5) zur Abführung austretender Leckagen angeordnet ist.

10. Pumpe mit einer Rückwand (7) und einer Brille (4) im Wellendichtungsraum (16) mit einem Dichtungsbalgsystem nach einem der Ansprüche 1 bis 9, **dadurch gekennzeichnet, dass** das Dichtungsbalgsystem zwischen der Rückwand (7) und der Brille (4) über einen an der Brille (4) verschraubten Gehäusering (3) befestigt ist.

## Claims

1. A sealing bellows system for rotating shafts (6), in particular on pumps, having a sealing bellows (8) that has a press-on surface (9) which when the shaft (6) is at a standstill is pressed by a pressure medium onto the shaft (6) and seals the latter,
**characterised**
- **in that** the press-on surface (9) at its ends by way of respective curved projections (10a, 10b) extending in the longitudinal direction of the shaft (6) changes into a collar (2) with a reduced circumference,
- **in that** the two curved projections (10a, 10b) are arranged in a freely movable manner, and
- **in that** the sealing bellows (8) is produced from an elastomer or fluoro-plastics material.

2. A sealing bellows system according to claim 1, **characterised in that** the sealing bellows (8) is produced from Teflon.

3. A sealing bellows system according to claim 1 or 2, **characterised in that** the elastomer or the fluoro-plastics material contains rigidity-increasing fillers.

4. A sealing bellows system according to claim 3, **characterised in that** the fillers consist of one or more of the following substances: graphite, talcum, chalk, titanium dioxide, silicon carbide, glass particles.

5. A sealing bellows system according to one of claims 1 to 4, **characterised in that** grooves (11) running in the circumferential direction are arranged on the press-on surface (9).

6. A sealing bellows system according to one of claims 1 to 5, **characterised in that** a supporting ring (1) is inserted in the collar (2), in which case there is an interspace (12) between the supporting ring (1) and the press-on surface (9).

7. A sealing bellows system according to one of claims 1 to 6, **characterised in that** arranged at the upper end of the collar (2) there is a flange (13) for receiving a sealing ring (14), and this flange (13) is clamped in a holding support in a sealing manner.

8. A sealing bellows system according to claim 6 or 7, **characterised in that** a bore (15) is arranged in the supporting ring (1) for the supply of the pressing medium.

9. A sealing bellows system according to one of claims 1 to 8, **characterised in that** arranged in the region of the collar (2) there is a drip ring (5) that extends in the longitudinal direction in order to carry off leakages that emerge.

10. Pump having a rear wall (7) and a back rest (4) in the shaft-sealing space (16) having a sealing bellows system according to one of claims 1 to 9, **characterised in that** the sealing bellows system is secured between the rear wall (7) and the back rest (4) by way of a housing ring (3) that is screwed onto the back rest (4).

## Revendications

1. Système de joint à soufflet pour arbres tournants (6), en particulier sur des pompes, comprenant un soufflet d'étanchéité (8) avec une surface d'appui (9) qui, lorsque l'arbre (6) est arrêté, est pressée par un fluide de pression contre l'arbre (6) et assure son étanchéité, **caractérisé par le fait**
- **que** la surface d'appui (9) se raccorde au niveau de ses extrémités à un col (2) de circonférence réduite, respectivement par l'intermédiaire d'un renflement (10a, 10b) s'étendant dans le sens de la longueur de l'arbre (6),
- **que** les deux renflements (10a, 10b) sont disposés de manière librement déplaçable, et
- **que** le soufflet d'étanchéité (8) est fabriqué à partir d'un élastomère ou d'une matière synthétique fluorée.

2. Système de joint à soufflet selon la revendication 1, **caractérisé par le fait que** le soufflet d'étanchéité (8) est réalisé en téflon.

3. Système de joint à soufflet selon la revendication 1 ou 2, **caractérisé par le fait que** l'élastomère ou la matière plastique fluorée contient des matières de charge augmentant la résistance.

4. Système de joint à soufflet selon la revendication 3, **caractérisé par le fait que** les matières de charge sont constituées d'un ou plusieurs des matériaux suivants: graphite, talc, craie, dioxyde de titane, carbure de silicium, particules de verre.

5. Système de joint à soufflet selon une des revendications 1 à 4, **caractérisé par le fait que** des rainures (11) s'étendant dans la direction périphérique sont aménagées dans la surface d'appui (9).

6. Système de joint à soufflet selon une des revendications 1 à 5, **caractérisé par le fait qu'**une bague support (1) est insérée dans le col (2), en laissant subsister une distance entre la bague support (1) et la surface d'appui (9).

7. Système de joint à soufflet selon une des revendications 1 à 6, **caractérisé par le fait qu'**un rebord (13), destiné à recevoir un anneau d'étanchéité (14), est disposé sur l'extrémité supérieure du col (2) et que ce rebord (13) est serré de manière étanche dans un élément de fixation.

8. Système de joint à soufflet selon la revendication 6 ou 7, **caractérisé par le fait que** la bague support (1) comporte un trou (15) pour l'amenée du fluide de pression.

9. Système de joint à soufflet selon une des revendications 1 à 8, **caractérisé par le fait que** dans la région du col (2), il est prévu une bague pare-gouttes (5) qui s'étend dans la direction longitudinale et est destinée à évacuer les fuites.

10. Pompe dotée d'une paroi arrière (7) et d'une lunette (4) dans l'espace d'étanchéité d'arbre (16), comprenant un système de joint à soufflet selon une des revendications 1 à 9, **caractérisée par le fait que** le système de joint à soufflet est fixé entre la paroi arrière (7) et la lunette (4), par l'intermédiaire d'une bague de carter (3) vissée à la lunette (4).
